# EUROPEAN PATENT SPECIFICATION

(11) **EP 4 394 253 B1**
(45) Date of publication and mention of the grant of the patent: **18.02.2026**
(21) Application number: 22217343.7
(22) Date of filing: 30.12.2022
(51) Int. Cl.: F23R 3/34, F23R 3/36, F23R 3/42, F23R 3/50

(54) **GAS TURBINE ENGINE**
GASTURBINENTRIEBWERK
MOTEUR À TURBINE À GAZ

(43) Date of publication of application: 03.07.2024
(73) Proprietor: Ansaldo Energia Switzerland AG, 5400 Baden (CH)
(72) Inventor: CIANI, Andrea, 5400 BADEN (CH); MAURER, Michael Thomas, 5400 BADEN (CH)
(74) Representative: Studio Torta S.p.A.

(56) References cited:
- EP-A1- 3 367 001
- US-A1- 2002 157 400
- US-A1- 2016 123 597
- US-A1- 2021 301 722
- US-B1- 6 374 594

## Description

### TECHNICAL FIELD

The present invention relates to a gas turbine engine.

### BACKGROUND

As is known, market and law requirements as to performance and pollutant emissions of gas turbine power plants are becoming more and more stringent. As a result, there is an increasing demand for gas turbine engines sufficiently flexible to run on different types of fuel, including natural gas, hydrogen and blends thereof, and at the same time meet all emissions and performance requirements.

In many cases, gas turbine engines for power plants comprise an annular combustion chamber and a plurality of burner assemblies, which are designed to run on gaseous (natural gas or syngas) or liquid fuel. A burner assembly may include a central lance injector, a diffusion or partially premixed pilot burner and an outer main premix burner, around the pilot burners. Each burner of the burner assembly is configured to supply a fuel flowrate, which is burned in the annular combustion chamber. The burner assemblies of known gas turbine engines are specifically optimized to be operated on natural gas or syngas or on fuel oil and performance and/or emissions level cannot be assured when a different fuel is used, for example ammonia or hydrogen.

A need is therefore felt for upgrading gas turbine engines with annular combustion chamber, whether new or already in place, so that also these kinds of turbomachines may be effectively and flexibly run on different fuels, including hydrogen, ammonia, methane and natural gas, in compliance with current market demand and law requirements for pollutant emissions.

US 2002/157400 A1 discloses a gas turbine engine comprising an annular combustion chamber and a plurality of single-stage combustors communicating with the annular combustion chamber, wherein each single-stage combustor defines a respective gas flow path along a respective combustor axis and is configured to discharge into the annular combustion chamber.

Other examples of known gas turbine engines are disclosed in EP 3 367 001 A1, in US 2021/301722 A1, in US 2016/123597 A1 and in US 6 374 594 B1.

### SUMMARY OF THE INVENTION

It is an aim of the present invention to provide a gas turbine engine that allows the above limitations to be overcome or at least reduced.

According to the present invention, there is provided a gas turbine engine comprising:
an annular combustion chamber;
a plurality of combustors communicating with the annular combustion chamber, wherein each combustor defines a respective gas flow path along a respective combustor axis and comprises a first combustor stage and a second combustor stage, sequentially arranged along the respective gas flow path, and wherein the second combustor stages of the combustors are configured to discharge into the annular combustion chamber.

The invention allows to exploit the advantages of sequential combustion in gas turbine engines having a single annular combustion chamber. The annular combustion chamber serves all the second combustor stages, while the first stage of combustion takes place separately without mixing flows of different combustors. Sequential combustion is very flexible and allows to meet requests on performance and pollutant emission with a wide range of fuels, that include hydrogen, ammonia, natural gas and syngas. Thus, the benefit of sequential combustion may be made available for machines of any size, i.e. for complex and costly high-class gas turbines as well as for lower class and lower size gas turbines, which are less expensive, simpler and more compact and therefore also suitable for a variety of applications.

According to an aspect of the invention, the gas flow path of each combustor is separated from the gas flow paths of the other combustors upstream of the annular combustion chamber.

According to an aspect of the invention, the annular combustion chamber defines a common combustion chamber for the second combustor stages of the combustors.

According to an aspect of the invention, the first combustor stage of each combustor comprises a plurality of respective microburners distributed around the respective combustor axis.

Microburners allows to produce short flames, with fronts near the respective nozzles. As space occupied by each microburner is very small, many of them may be distributed around the combustor axis to obtain combustion conditions in accordance with design preferences. Turbulence caused by outlets of neighboring microburners favor rapid and effective mixing of fuel and air and allow satisfactory combustion conditions even in small space. Very compact combustors may thus be made.

According to an aspect of the invention, each combustor comprises a combustor casing, delimiting the respective gas flow path, and a supporting plate arranged to close an upstream end of the combustor casing and supporting the microburners of the respective combustor, and wherein each microburner comprises a fuel conduit and an air conduit forming first stage nozzles at a nozzle surface of the respective supporting plate adjacent to the gas flow path.

According to an aspect of the invention, each nozzle surface has a density of first stage nozzles between 50 nozzles/m² and 300 nozzles/m².

Such a density of first stage nozzles assures effective mixing and reliable flame conditions to avoid pollutant emissions.

According to an aspect of the invention, each combustor comprises a fuel plenum and wherein in each combustor the microburners of at least a first group of microburners have the respective fuel conduits coupled to the fuel plenum of the respective combustor.

According to an aspect of the invention, in each combustor all the microburners have the respective fuel conduits coupled to the fuel plenum of the respective combustor or the microburners of a second group of microburners are decoupled from the fuel plenum of the respective combustor.

All the microburners may be used to give contribution to combustion and increase power output or, in accordance to design preferences, part of the microburners may be used to supply air only, which may improve turbulence and mixing rate and/or serve as dilution air for the second combustor stage.

According to an aspect of the invention, each combustor comprises a central lance injector extending through the respective supporting plate up to the respective second combustor stage.

According to an aspect of the invention, each central lance injector comprises an inner fuel conduit coupled to the fuel supply system and second stage nozzles supplied by the inner fuel conduit and configured to deliver fuel into the gas flow path at the second stage combustor.

On the one side, lance injectors allow designing two-stage combustors with compact structure without affecting efficiency, performance and quality of combustion. On the other hand, replacement of lance injectors is straightforward, so also maintenance is made simple.

According to an aspect of the invention, each combustor comprises a dilution air mixer, configured to introduce air into the gas flow path at a location between the first combustor stage and the second combustor stage.

According to an aspect of the invention, the gas turbine engine comprises a compressor and a combustion chamber casing, defining a common air plenum configured to receive compressed air from the compressor and to supply the compressed air to the combustors.

According to an aspect of the invention, the combustors are housed in the common air plenum, between the combustion chamber casing and the annular combustion chamber, the combustors being preferably configured to receive air directly from the common air plenum.

Combustors based on microburners have an extremely compact design, especially as far as combustor axial length is concerned. As a result, the size of two-stage combustors may be so small that the combustors may be completely enclosed in the common combustor, saving space outside the combustion chamber casing.

According to an aspect of the invention, each combustor comprises a combustor casing, having a first portion and a second portion, wherein each first stage combustor comprises a central burner housed in the first portion of the respective combustor casing and the first portion of the combustor casing defines a local air plenum for the first stage combustor, and wherein the local air plena are configured to receive air from the common air plenum through respective piping systems.

According to an aspect of the invention, each combustor comprises a transition duct, housed in the second portion of the respective combustor casing between the respective first combustor stage and the respective second combustor stage, wherein the dilution air mixer of each combustor is housed in the second portion of the respective combustor casing and is configured to introduce air into the gas flow path from the common air plenum through a respective port in the combustion chamber casing, and wherein the second combustor stage of the combustors is housed in the common air plenum, between the combustion chamber casing and the annular combustion chamber.

### BRIEF DESCRIPTION OF THE DRAWINGS

The present invention will now be described with reference to the accompanying drawings, which show a number of non-limitative embodiments thereof, in which:
- figure 1 is a simplified block diagram of a gas turbine engine in accordance with an embodiment of the present invention;
- figure 2 is a cross sectional lateral view of part of a combustor assembly of the gas turbine engine of figure 1, with parts removed for clarity;
- figure 3 is a cross-sectional lateral view, cut along a longitudinal axial plane, of a component of the combustor assembly of figure 2;
- figure 4 is a perspective view of the component of figure 3, partially cut along a longitudinal axial plane;
- figure 5 is a cross-sectional lateral view of an enlarged detail of the component of figure 3;
- figure 6 is a cross-sectional lateral view of an enlarged detail of the component of figure 3, in accordance with a different embodiment of the present invention; and
- figure 7 is a cross sectional lateral view of part of a combustor assembly of a gas turbine engine in accordance with another embodiment of the present invention, with parts removed for clarity.

### DETAILED DESCRIPTION OF EXEMPLARY EMBODIMENTS

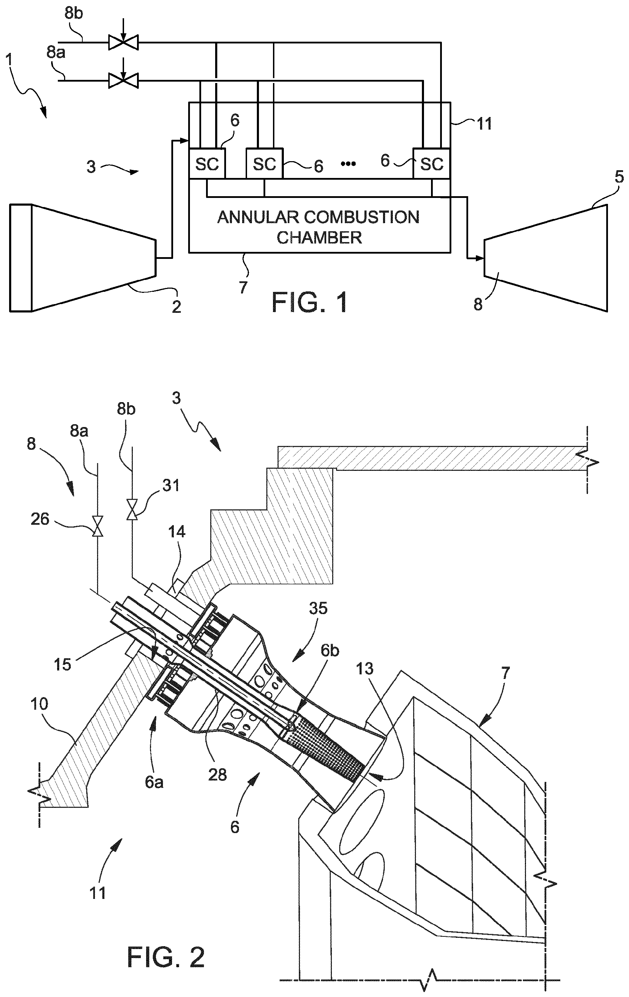

With reference to Figure 1, a gas turbine engine in accordance with an embodiment of the present invention is indicated by numeral 1 and comprises a compressor 2, a combustor assembly 3 and an expansion section or turbine 5.

The axial-type compressor 2 feeds the combustor assembly 3 with a flow of air drawn from outside.

The combustor assembly 3 comprises a plurality of two-stage sequential combustors 6 and a common annular combustion chamber 7. The combustors 6 receive a fuel flowrate from one or more fuel sources, e.g. a fuel supply system 8 with a first fuel line 8a and a second fuel line 8b, and cause the combustion of a mixture of air and fuel. The fuel may be, by way of non-limiting example, natural gas, syngas, hydrogen, methane or ammonia. Moreover, the first fuel line 8a and the second fuel line 8b may supply both the same fuel or respective different types of fuel.

The turbine 7 receives and expands the flow exhaust gas from the combustor assembly 3 to extract mechanical work, which is transferred to an external user, typically an electric generator, here not shown.

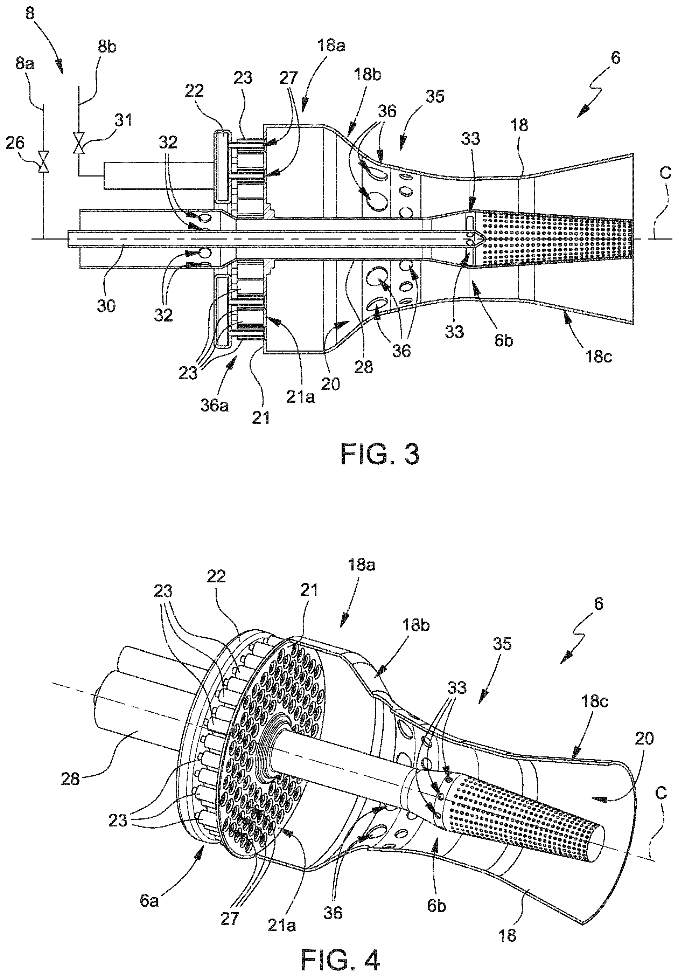

Part of the combustor assembly 3, including one of the combustors 6, is illustrated in greater detail in figure 2. The combustor 6 is also shown in isolation in figures 3 and 4. It is herein understood that all the burners 6 have the identical structure.

The annular combustion chamber 7 is housed in combustion chamber casing 10 of the gas turbine engine 1. The combustion chamber casing 10 defines a common air plenum 11 around the annular combustion chamber 7 and is coupled to the compressor 2 to receive a flow of compressed air. Compressed air is then supplied to the burners.

The combustors 6 are circumferentially distributed around the annular combustion chamber 7 and are in fluid communication with the interior thereof through respective coupling ports 13. In one embodiment, the combustors 6 are secured to the combustion chamber casing 10 by mounting plates 14 through mounting ports 15 in the combustion chamber casing 10. The mounting plates 14 seal the mounting ports 15, so that air is fed to the combustors 6 only from the common plenum 11. The combustors 6 are housed in the common air plenum 11, between the combustion chamber casing 10 and the annular combustion chamber 7. The mounting plates 14 and the mounting ports 15 allow connection of the combustor 6 to the fuel supply system 8.

With reference to figures 3 and 4, each combustor 6 comprises a combustor casing 18, extending along a combustor axis C and delimiting a respective gas flow path 20. Therefore, the gas flow path 20 of each combustor 6 is separated from the gas flow paths 20 of the other combustors 6 upstream of the annular combustion chamber 7. A supporting plate 21 is arranged to close an upstream end of the combustor casing 18. In one embodiment, the combustor casing 18 has a cylindrical portion 18a, adjacent to the supporting plate 21, an intermediate convergent portion 18b and an end divergent portion 18c.

Each combustor 6 also comprises a first combustor stage 6a and a second combustor stage 6b, sequentially arranged along the respective gas flow path 20, and a fuel plenum 22, in the form of a ring arranged coaxially to the first combustor stage 6a and to second combustor stage 6b.

The first combustor stage 6a of each combustor comprises a plurality of respective microburners 23 supported by the supporting plate 21 and distributed around the respective combustor axis C.

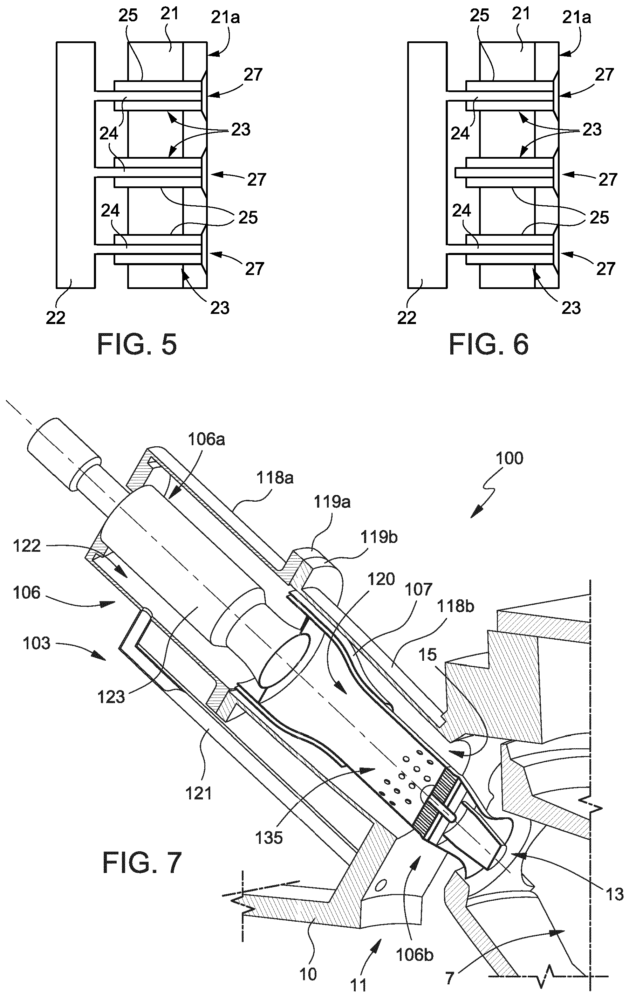

As illustrated in figure 5, each microburner 23 comprises a fuel conduit 24 and an air conduit 25 coaxially arranged and forming first stage nozzles 27 at a nozzle surface 21a of the respective supporting plate 21 adjacent to the gas flow path 20. The number of first stage nozzles 27 is selected such that the nozzle surfaces 21a of the supporting plates 21 have a density of first stage nozzles 27 between 50 nozzles/m² and 300 nozzles/m².

In the embodiment of figures 3-5, all the microburners 23 have the respective fuel conduits 24 coupled to the fuel plenum 22 of the respective combustor 6. In another embodiment (figure 6), in each combustor 6 microburners 23 of a group of have the respective fuel conduits 24 coupled to the fuel plenum 22, whereas microburners 23 of another group are decoupled from the fuel plenum 22, thus simply defining air passages. The fuel plenum 22 is in turn coupled to the first fuel line 8a of the fuel supply system 8 through a first stage valve 26. The air conduits 25 are spaced apart from the fuel plenum 22, so that air may be fed to the microburners 23 through passages between the fuel plenum 22. The microburners 23 are configured to create flames at a short distance from the nozzle surfaces 21a and turbulence created by air and fuel flows leaving the first stage nozzles 27 favors mixing. The microburners 23 may be designed so that first stage flames are confined substantially to the cylindrical portion 18a of the combustor casing 18, where a reaction zone is defined.

The second combustor stages 6b of the combustors 6 are configured to discharge into the annular combustion chamber 7. Therefore, the annular combustion chamber 7 defines a common combustion chamber for the second combustor stages 6b of the combustors 6.

Each combustor 6 also comprises a central lance injector 28, extending through the respective supporting plate 21 and fuel plenum 22 into the combustor casing 18, up to the respective second combustor stage 6b, in the end divergent portion 18c of the combustor casing 18. Each central lance injector 28 comprises an inner fuel conduit 30 coupled to the second fuel line 8b of the fuel supply system 8 through respective second stage valves 31. The central lance injector 28 has air inlets 32 circumferentially arranged upstream of the supporting plate 21 and second stage nozzles 33 supplied by the inner fuel conduit 30 and configured to deliver fuel into the gas flow path 20 at the second stage combustor. In one embodiment, the second stage nozzles 33 may be configured to deliver fuel into the gas flow path 20 substantially in a radial, crossflow direction.

Each combustor 6 comprises a dilution air mixer 35, configured to introduce air for the purpose of sequential combustion into the gas flow path 20, at a location between the first combustor stage 6a and the second combustor stage 6b. The dilution air mixer 35 includes mixing openings 36 in the intermediate convergent portion 18b of the respective combustor 6. The mixing openings 36 allow to introduce dilution air into the gas flow path 20 of the combustors 6 directly from the common air plenum 11.

A different embodiment of the invention is illustrated in figure 7, where parts identical to parts already described are indicated by the same reference numbers. In this embodiment, a gas turbine engine 100 comprises the compressor 2, a combustor assembly 103 and the expansion section or turbine 5.

The combustor assembly 103 comprises the common annular combustion chamber 7 and a plurality of two-stage sequential combustors 106 circumferentially distributed around the annular combustion chamber 7 and communicating with the annular combustion chamber 7 through the coupling ports 13.

Each sequential combustors 106 comprises a first combustor stage 106a, a second combustor stage 106b, a transition duct 107 and a dilution air mixer 135. The first combustor stage 106a, the transition duct 107 and the dilution air mixer 135 are housed in a combustor casing 118 outside the combustion chamber casing 10, whereas the second combustor stage 106b is accommodated in the common plenum 11. The combustor casing 118 has a first portion 118a and a second portion 118b joined to each other by flanges 119a, 119b. The first portion 118a of the combustor casing 118 houses the first combustor stage 106a and forms a local air plenum 122, coupled to the common plenum 11 and receiving compressed air through a piping system 121 arranged externally to the combustion chamber casing 10. The second portion 118b of the combustor casing 118 houses the transition duct 107 and the dilution air mixer 135.

The first stage combustor 106a and the second stage combustor 106b are sequentially arranged along a respective gas flow path 120, that is also defined through the transition duct 107 and the dilution air mixer 135.

The first stage combustor 106a comprises a central burner 123 housed in the first portion 118a of the respective combustor casing 118 and configured to feed mixture of fuel and air into the transition duct 107, where a reaction zone is defined.

The dilution air mixer 135 is arranged downstream of the transition duct 107 and is configured to introduce air into the gas flow path 120 from the common air plenum 11 through a respective mounting port 15.

The second combustor stage 106b is housed in the common air plenum 11, between the combustion chamber casing 10 and the annular combustion chamber 7. The second combustor stage 106b is directly coupled to the annular combustion chamber 7 through a respective coupling port 13.

Finally, it is clear that modifications and variants may be made to the gas turbine engine described herein without departing from the scope of the present invention, as defined in the appended claims.

## Claims

1. A gas turbine engine comprising:
an annular combustion chamber (7);
a plurality of sequential combustors (6) communicating with the annular combustion chamber (7), wherein each combustor (6) defines a respective gas flow path (20) along a respective combustor axis (C) and comprises a first combustor stage (6a) and a second combustor stage (6b), sequentially arranged along the respective gas flow path (20), and wherein the second combustor stages (6b) of the combustors (6) are configured to discharge into the annular combustion chamber (7).

2. The gas turbine engine according to claim 1, wherein the gas flow path (20) of each combustor (6) is separated from the gas flow paths (20) of the other combustors (6) upstream of the annular combustion chamber (7).

3. The gas turbine engine according to claim 1 or 2, wherein the annular combustion chamber (7) defines a common combustion chamber for the second combustor stages (6b) of the combustors (6).

4. The gas turbine engine according to any one of the preceding claims, wherein the first combustor stage (6a) of each combustor (6) comprises a plurality of respective microburners (23) distributed around the respective combustor axis (C).

5. The gas turbine engine according to claim 4, wherein each combustor (6) comprises a combustor casing (18), delimiting the respective gas flow path (20), and a supporting plate (21) arranged to close an upstream end of the combustor casing (18) and supporting the microburners (23) of the respective combustor (6), and wherein each microburner (23) comprises a fuel conduit (24) and an air conduit (25) forming first stage nozzles (27) at a nozzle surface (21a) of the respective supporting plate (21) adjacent to the gas flow path (20).

6. The gas turbine engine according to claim 5, wherein each nozzle surface (21a) has a density of first stage nozzles (27) between 50 nozzles/m² and 300 nozzles/m².

7. The gas turbine engine according to claim 5 or 6, wherein each combustor (6) comprises a fuel plenum (22) and wherein in each combustor (6) the microburners (23) of at least a first group of microburners (23) have the respective fuel conduits (24) coupled to the fuel plenum (22) of the respective combustor (6).

8. The gas turbine engine according to claim 7, wherein in each combustor (6) all the microburners (23) have the respective fuel conduits (24) coupled to the fuel plenum (22) of the respective combustor (6) or the microburners (23) of a second group of microburners (23) are decoupled from the fuel plenum (22) of the respective combustor (6).

9. The gas turbine engine according to any one of claims 5 to 8, wherein each combustor (6) comprises a central lance injector (28) extending through the respective supporting plate (21) up to the respective second combustor stage (6b).

10. The gas turbine engine according to claim 9, comprising a fuel supply system (8), wherein each central lance injector (28) comprises an inner fuel conduit (30) coupled to the fuel supply system (8) and second stage nozzles supplied by the inner fuel conduit (30) and configured to deliver fuel into the gas flow path (20) at the second stage combustor (6).

11. The gas turbine engine according to any one of claims 4 to 10, wherein each combustor (6; 106) comprises a dilution air mixer (35; 135), configured to introduce air into the gas flow path (20; 120) at a location between the first combustor stage (6a; 106a) and the second combustor stage (6b; 106b).

12. The gas turbine engine according to claim 11, comprising a compressor (2) and a combustion chamber casing (10), defining a common air plenum (11) configured to receive compressed air from the compressor (2) and to supply the compressed air to the combustors (6).

13. The gas turbine engine according to claim 12, wherein the combustors (6) are housed in the common air plenum, between the combustion chamber casing and the annular combustion chamber (7), the combustors (6) being preferably configured to receive air directly from the common air plenum.

14. The gas turbine engine according to claim 12, wherein each combustor (106) comprises a combustor casing (118), having a first portion (118a) and a second portion (118b), wherein each first stage combustor (106) comprises a central burner (123) housed in the first portion (118a) of the respective combustor casing (118) and the first portion (118a) of the combustor casing (118) defines a local air (122) plenum for the first stage combustor (106), and wherein the local air plena (122) are configured to receive air from the common air plenum (11) through respective piping systems (121).

15. The gas turbine engine according to claim 14, wherein each combustor (106) comprises a transition duct (107), housed in the second portion (118b) of the respective combustor casing (118) between the respective first combustor stage (106a) and the respective second combustor stage (106b), wherein the dilution air mixer (135) of each combustor (106) is housed in the second portion (118b) of the respective combustor casing (118) and is configured to introduce air into the gas flow path (20) from the common air plenum (11) through a respective port (15) in the combustion chamber casing (10), and wherein the second combustor stage (6b) of the combustors (106) is housed in the common air plenum (11), between the combustion chamber casing (10) and the annular combustion chamber (7).

## Patentansprüche

1. Gasturbinenmaschine, umfassend:
eine ringförmige Brennkammer (7);
mehrere sequentielle Brenner (6), die mit der ringförmigen Brennkammer (7) in Verbindung stehen, wobei jeder Brenner (6) einen entsprechenden Gasströmungspfad (20) entlang einer entsprechenden Brennerachse (C) definiert und eine erste Brennerstufe (6a) und eine zweite Brennerstufe (6b) umfasst, die sequentiell entlang des entsprechenden Gasströmungspfades (20) angeordnet sind, und wobei die zweiten Brennerstufen (6b) der Brenner (6) so konfiguriert sind, dass sie in die ringförmige Brennkammer (7) ausblasen.

2. Gasturbinenmaschine nach Anspruch 1, wobei der Gasströmungspfad (20) jedes Brenners (6) stromaufwärts der ringförmigen Brennkammer (7) von den Gasströmungspfaden (20) der anderen Brenner (6) getrennt ist.

3. Gasturbinenmaschine nach Anspruch 1 oder 2, wobei die ringförmige Brennkammer (7) eine gemeinsame Brennkammer für die zweiten Brennerstufen (6b) der Brenner (6) definiert.

4. Gasturbinenmaschine nach einem der vorangehenden Ansprüche, wobei die erste Brennerstufe (6a) jedes Brenners (6) mehrere entsprechende Mikrobrenner (23) umfasst, die um die jeweilige Brennerachse (C) herum verteilt angeordnet sind.

5. Gasturbinenmaschine nach Anspruch 4, wobei jeder Brenner (6) ein Brennergehäuse (18), das den jeweiligen Gasströmungspfad (20) begrenzt, und eine Trägerplatte (21) umfasst, die so angeordnet ist, dass sie ein stromaufwärtiges Ende des Brennergehäuses (18) verschließt und die Mikrobrenner (23) des entsprechenden Brenners (6) trägt, und wobei jeder Mikrobrenner (23) eine Brennstoffleitung (24) und eine Luftleitung (25) umfasst, die an einer zu dem Gasströmungspfad (20) benachbarten Düsenfläche (21a) der entsprechenden Trägerplatte (21) Düsen der ersten Stufe (27) bilden.

6. Gasturbinenmaschine nach Anspruch 5, wobei jede Düsenfläche (21a) eine Dichte der Düsen der ersten Stufe (27) zwischen 50 Düsen/m² und 300 Düsen/m² aufweist.

7. Gasturbinenmaschine nach Anspruch 5 oder 6, wobei jeder Brenner (6) eine Brennstoffverteilerkammer (22) aufweist und wobei in jedem Brenner (6) die entsprechenden Brennstoffleitungen (24) der Mikrobrenner (23) von wenigstens einer ersten Gruppe von Mikrobrennern (23) mit der Brennstoffverteilerkammer (22) des entsprechenden Brenners (6) gekoppelt sind.

8. Gasturbinenmaschine nach Anspruch 7, wobei in jedem Brenner (6) die entsprechenden Brennstoffleitungen (24) aller Mikrobrenner (23) mit der Brennstoffverteilerkammer (22) des entsprechenden Brenners (6) gekoppelt sind oder die Mikrobrenner (23) einer zweiten Gruppe von Mikrobrennern (23) von der Brennstoffverteilerkammer (22) des entsprechenden Brenners (6) entkoppelt sind.

9. Gasturbinenmaschine nach einem der Ansprüche 5 bis 8, wobei jeder Brenner (6) einen zentralen Lanzeninjektor (28) umfasst, der sich durch die entsprechende Trägerplatte (21) bis zu der entsprechenden zweiten Brennerstufe (6b) erstreckt.

10. Gasturbinenmaschine nach Anspruch 9, die ein Brennstoffversorgungssystem (8) umfasst, wobei jeder zentrale Lanzeninjektor (28) eine innere Brennstoffleitung (30) umfasst, die mit dem Brennstoffversorgungssystem (8) gekoppelt ist, und Düsen der zweiten Stufe, die von der inneren Brennstoffleitung (30) versorgt werden und so konfiguriert sind, dass sie Brennstoff in den Gasströmungspfad (20) am Brenner (6) der zweiten Stufe zuführen.

11. Gasturbinenmaschine nach einem der Ansprüche 4 bis 10, wobei jeder Brenner (6; 106) einen Verdünnungsluftmischer (35; 135) umfasst, der so konfiguriert ist, dass er Luft in den Gasströmungspfad (20; 120) an einer Stelle zwischen der ersten Brennerstufe (6a; 106a) und der zweiten Brennerstufe (6b; 10617) einleitet.

12. Gasturbinenmaschine nach Anspruch 11, die einen Verdichter (2) und ein Brennkammergehäuse (10) umfasst, das eine gemeinsame Luftverteilerkammer (11) definiert, die so konfiguriert ist, dass sie verdichtete Luft von dem Verdichter (2) aufnimmt und die verdichtete Luft den Brennern (6) zuführt.

13. Gasturbinenmaschine nach Anspruch 12, wobei die Brenner (6) in der gemeinsamen Luftverteilerkammer zwischen dem Brennkammergehäuse und der ringförmigen Brennkammer (7) untergebracht sind, wobei die Brenner (6) vorzugsweise so konfiguriert sind, dass sie Luft direkt aus der gemeinsamen Luftverteilerkammer aufnehmen.

14. Gasturbinenmaschine nach Anspruch 12, wobei jeder Brenner (106) ein Brennergehäuse (118) mit einem ersten Abschnitt (118a) und einem zweiten Abschnitt (118b) aufweist, wobei jeder Brenner (106) der ersten Stufe einen zentralen Brenner (123) umfasst, der in dem ersten Abschnitt (118a) des entsprechenden Brennergehäuses (118) untergebracht ist, und der erste Abschnitt (118a) des Brennergehäuses (118) eine lokale Luftverteilerkammer (122) für den Brenner (106) der ersten Stufe definiert, und wobei die lokalen Luftverteilerkammern (122) so konfiguriert sind, dass sie Luft aus der gemeinsamen Luftverteilerkammer (11) durch entsprechende Rohrleitungssysteme (121) aufnehmen.

15. Gasturbinenmaschine nach Anspruch 14, wobei jede Brennkammer (106) einen Überleitungskanal (107) umfasst, der in dem zweiten Abschnitt (118b) des entsprechenden Brennkammergehäuses (118) zwischen der entsprechenden ersten Brennerstufe (106a) und der entsprechenden zweiten Brennerstufe (106b) untergebracht ist, wobei der Verdünnungsluftmischer (135) jedes Brenners (106) in dem zweiten Abschnitt (118b) des entsprechenden Brennergehäuses (118) untergebracht ist und so konfiguriert ist, dass er Luft aus der gemeinsamen Luftverteilerkammer (11) durch einen entsprechenden Anschluss (15) in dem Brennkammergehäuse (10) in den Gasströmungspfad (20) einleitet, und wobei die zweite Brennerstufe (6b) der Brenner (106) in der gemeinsamen Luftverteilerkammer (11) zwischen dem Brennkammergehäuse (10) und der ringförmigen Brennkammer (7) untergebracht ist.

## Revendications

1. Moteur à turbine à gaz comprenant :
une chambre de combustion annulaire (7) ;
une pluralité de dispositifs de combustion successifs (6) qui communiquent avec la chambre de combustion annulaire (7), dans lequel chaque dispositif de combustion (6) définit un trajet d'écoulement de gaz respectif (20) le long d'un axe de dispositif de combustion respectif (C) et comprend un premier étage de dispositif de combustion (6a) et un deuxième étage de dispositif de combustion (6b), prévus successivement le long du trajet d'écoulement de gaz respectif (20), et dans lequel les deuxièmes étages de dispositifs de combustion (6b) des dispositifs de combustion (6) sont configurés pour s'évacuer vers la chambre de combustion annulaire (7).

2. Moteur à turbine à gaz selon la revendication 1, dans lequel le trajet d'écoulement de gaz (20) de chaque dispositif de combustion (6) est séparé des trajets d'écoulement de gaz (20) des autres dispositifs de combustion (6) en amont de la chambre de combustion annulaire (7).

3. Moteur à turbine à gaz selon la revendication 1 ou 2, dans lequel la chambre de combustion annulaire (7) définit une chambre de combustion commune pour les deuxièmes étages de dispositifs de combustion (6b) des dispositifs de combustion (6).

4. Moteur à turbine à gaz selon l'une quelconque des revendications précédentes, dans lequel le premier étage de dispositif de combustion (6a) de chaque dispositif de combustion (6) comprend une pluralité de microbrûleurs respectifs (23) répartis autour de l'axe de dispositif de combustion respectif (C).

5. Moteur à turbine à gaz selon la revendication 4, dans lequel chaque dispositif de combustion (6) comprend une enceinte de dispositif de combustion (18), qui délimite le trajet d'écoulement de gaz respectif (20), et une plaque de support (21) prévue pour fermer une extrémité amont de l'enceinte de dispositif de combustion (18) et qui supporte les microbrûleurs (23) du dispositif de combustion respectif (6), et dans lequel chaque microbrûleur (23) comprend un conduit de combustible (24) et un conduit d'air (25) qui forment des buses de premier étage (27) au niveau d'une surface de buse (21a) de la plaque de support respective (21) adjacente au trajet d'écoulement de gaz (20).

6. Moteur à turbine à gaz selon la revendication 5, dans lequel chaque surface de buse (21a) présente une densité de buses de premier étage (27) comprise entre 50 buses/m² et 300 buses/m².

7. Moteur à turbine à gaz selon la revendication 5 ou 6, dans lequel chaque dispositif de combustion (6) comprend une chambre de distribution de combustible (22) et dans lequel, dans chaque dispositif de combustion (6), les microbrûleurs (23) d'au moins un premier groupe de microbrûleurs (23) présentent les conduits de combustible respectifs (24) couplés à la chambre de distribution de combustible (22) du dispositif de combustion respectif (6).

8. Moteur à turbine à gaz selon la revendication 7, dans lequel, dans chaque dispositif de combustion (6), tous les microbrûleurs (23) présentent les conduits de combustible respectifs (24) couplés à la chambre de distribution de combustible (22) du dispositif de combustion respectif (6), ou les microbrûleurs (23) d'un deuxième groupe de microbrûleurs (23) sont découplés de la chambre de distribution de combustible (22) du dispositif de combustion respectif (6).

9. Moteur à turbine à gaz selon l'une quelconque des revendications 5 à 8, dans lequel chaque dispositif de combustion (6) comprend un injecteur à lance central (28) qui s'étend à travers la plaque de support respective (21) jusqu'au deuxième étage de dispositif de combustion respectif (6b).

10. Moteur à turbine à gaz selon la revendication 9, comprenant un système d'alimentation en combustible (8), dans lequel chaque injecteur à lance central (28) comprend un conduit de combustible interne (30) couplé au système d'alimentation en combustible (8) et des buses de deuxième étage alimentées par le conduit de combustible interne (30) et configurées pour fournir du combustible au trajet d'écoulement de gaz (20) au niveau du dispositif de combustion de deuxième étage (6).

11. Moteur à turbine à gaz selon l'une quelconque des revendications 4 à 10, dans lequel chaque dispositif de combustion (6 ; 106) comprend un mélangeur d'air de dilution (35 ; 135), configuré pour introduire de l'air dans le trajet d'écoulement de gaz (20 ; 120) à un emplacement situé entre le premier étage de dispositif de combustion (6a ; 106a) et le deuxième étage de dispositif de combustion (6b ; 106b).

12. Moteur à turbine à gaz selon la revendication 11, comprenant un compresseur (2) et une enceinte de chambre de combustion (10), qui définissent une chambre de distribution d'air commune (11) configurée pour recevoir de l'air comprimé de la part du compresseur (2) et pour fournir l'air comprimé aux dispositifs de combustion (6).

13. Moteur à turbine à gaz selon la revendication 12, dans lequel les dispositifs de combustion (6) sont contenus dans la chambre de distribution d'air commune, entre l'enceinte de chambre de combustion et la chambre de combustion annulaire (7), les dispositifs de combustion (6) étant de préférence configurés pour recevoir de l'air directement de la part de la chambre de distribution d'air commune.

14. Moteur à turbine à gaz selon la revendication 12, dans lequel chaque dispositif de combustion (106) comprend une enceinte de dispositif de combustion (118), ayant une première partie (118a) et une deuxième partie (118b), dans lequel chaque dispositif de combustion de premier étage (106) comprend un brûleur central (123) contenu dans la première partie (118a) de l'enceinte de dispositif de combustion respective (118) et la première partie (118a) de l'enceinte de dispositif de combustion (118) définit une chambre de distribution d'air locale (122) pour le dispositif de combustion de premier étage (106), et dans lequel les chambres de distribution d'air locales (122) sont configurées pour recevoir de l'air de la part de la chambre de distribution d'air commune (11) par le biais de systèmes de conduites respectifs (121).

15. Moteur à turbine à gaz selon la revendication 14, dans lequel chaque dispositif de combustion (106) comprend un conduit de transition (107), contenu dans la deuxième partie (118b) de l'enceinte de dispositif de combustion respective (118) entre le premier étage de dispositif de combustion respectif (106a) et le deuxième étage de dispositif de combustion respectif (106b), dans lequel le mélangeur d'air de dilution (135) de chaque dispositif de combustion (106) est contenu dans la deuxième partie (118b) de l'enceinte de dispositif de combustion respective (118) et est configuré pour introduire de l'air dans le trajet d'écoulement de gaz (20) depuis la chambre de distribution d'air commune (11) par le biais d'un orifice respectif (15) dans l'enceinte de chambre de combustion (10), et dans lequel le deuxième étage de dispositif de combustion (6b) des dispositifs de combustion (106) est contenu dans la chambre de distribution d'air commune (11), entre l'enceinte de chambre de combustion (10) et la chambre de combustion annulaire (7).
